# EUROPEAN PATENT SPECIFICATION

(11) **EP 1 592 746 B1**
(45) Date of publication and mention of the grant of the patent: **16.07.2008**
(21) Application number: 04709015.4
(22) Date of filing: 06.02.2004
(51) Int. Cl.: C08L 51/00

(54) **HALOGEN FREE IGNITION RESISTANT THERMOPLASTIC RESIN COMPOSITIONS**
HALOGENFREIE FLAMMWIDRIGE THERMOPLASTISCHE HARZZUSAMMENSETZUNG
COMPOSITIONS DE RESINE THERMOPLASTIQUE RESISTANT A LA COMBUSTION ET EXEMPTE D'HALOGENE

(30) Priority: 06.02.2003 US 445638 P
(43) Date of publication of application: 09.11.2005
(73) Proprietor: DOW GLOBAL TECHNOLOGIES INC., Midland, Michigan 48674 (US)
(72) Inventor: GAN, Joseph, 67100 Strasbourg (FR); KING, Bruce, Midland, MI 48640 (US); REGO, Jose, M., Heikant, Zeeland 4566BC (NL); YOUNGSON, Chris, G., Concord, CA 94519 (US)
(74) Representative: Raynor, John
(86) International application number: PCT/US2004/003499
(87) International publication number: WO 2004/072170

(56) References cited:
- WO-A-02/100947
- PATENT ABSTRACTS OF JAPAN vol. 2000, no. 14, 5 March 2001 (2001-03-05) & JP 2000 309699 A (TEIJIN CHEM LTD), 7 November 2000 (2000-11-07)

## Description

The present invention relates to thermoplastic polymer compositions which exhibit ignition resistance without the use of halogen containing compounds.

Ignition resistant polymers have typically utilized halogen containing compounds to provide ignition resistance. However, there has been an increasing demand for halogen free compositions in ignition resistant polymer markets. Combinations of polyphenylene ether resins and triphenyl phosphine oxide have also been used as ignition resistant components as disclosed in Haaf et al, U. S. Patent 4,107,232. However, such compositions have high viscosities due to the presence of high molecular weight polyphenylene ether resins, rendering it difficult to process through extrusion or injection molding equipment.

Proposals have been made to use phosphorus-based flame retardants instead of halogenated fire retardants in thermoset epoxy resin formulations as described in, for example, EP A 0384939, EP A 0384940, EP A 0408990, DE A 4308184, DE A 4308185, DE A 4308187, WO A 96/07685, and WO A 96/07686. In these formulations a phosphorus flame retardant is pre-reacted with an epoxy resin to form a di- or multifunctional epoxy resin which is then cured with an amino cross-linker such as dicyandiamide, sulfanilamide, or some other nitrogen element-containing cross-linker to form a network. However, these compositions are thermosets which cannot be used in injection molding applications.

JP2001-49096 discloses a flame resistant resin composition of a polyester resin, a styrene resin, for example, HIPS, and a flame retardant, for example, phosphorus containing compound in combination with an aromatic epoxy resin. JP2000-239543 discloses a flame resistant resin composition, comprising a thermoplastic resin and a phosphorus-containing compound in combination with a polyarylate or aromatic epoxy resin. In "Studies on the thermal stabilization enhancement of ABS; synergistic effect by triphenyl phosphate and epoxy resin mixtures" of Polymer 43(2002) 2249-2253, ABS compositions containing various epoxy resins with triphenylphosphate co-flame retardants are discussed. However, the epoxy resins utilized in the above compositions contain high levels of reactive epoxy groups which react during polymer processing, causing black specs in the finished product.

Therefore, there remains a need to provide a halogen free thermoplastic polymer composition useful for injection molding applications, having good ignition resistance and heat resistance, which overcome the disadvantages of the prior art.

The present invention relates to a halogen-free ignition resistant polymer composition comprising:
A) a thermoplastic polymer or polymer blend, and
B) a modified multi-functional epoxy resin which is the reaction product of a multi-functional epoxy resin, with an epoxy modifier which is a phenolic compound, a polyisocyanate, an acidic compound, an acid anhydride, or a compound containing an amino group; wherein the reaction product contains from 0 to less than 10 wt. percent residual epoxy groups, based on the total weight of the epoxy resin, and
C) a phosphorus containing compound.

Another embodiment of the present invention is a halogen-free ignition resistant polymer consisting essentially of:
A) from 40 to 94 weight percent, based on the total weight of the composition, of a thermoplastic polymer, optionally comprising 10-35 weight percent, based on the total weight of the composition, of a polyphenylene ether polymer (PPO);
B) from 1 to 30 weight percent, based on the total weight of the composition, of a modified multi-functional epoxy resin which is the reaction product of a multi-functional epoxy resin, with an epoxy modifier which is a phenolic compound, a polyisocyanate, an acidic compound, an acid anhydride, or a compound containing an amino group; wherein the reaction product contains from 0 to less than 10 wt. percent residual epoxy groups, based on the total weight of the epoxy resin; and
C) from 5 to 30 weight percent, based on the total weight of the composition, of the phosphorus compound such as an aryl phosphate.

The use of a modified multifunctional epoxy compound having from 0-20 weight percent residual epoxy groups, enhances the flame retardancy of the thermoplastic polymer, and can increase the compatibility of the epoxy resin with the thermoplastic polymer through the use of the modified functionalities, without causing black specks in the final product. It has been additionally discovered that modified multi-functional epoxy resins can also contribute to improved mechanical properties, melt flow rate and processability.

Component (A) of the halogen-free ignition resistant polymer composition is a thermoplastic polymer or polymer blend. Typical thermoplastic polymers include, but are not limited to, polymers produced from vinyl aromatic monomers and hydrogenated versions, such as styrene-butadiene block copolymers, polystyrene (including high impact polystyrene), acrylonitrile-butadiene-styrene (ABS) copolymers, and styrene-acrylonitrile copolymers (SAN); polycarbonate (PC), ABS/PC compositions, polyethylene terephthalate, epoxy resins, hydroxy phenoxy ether polymers (PHE)such as those taught in US Patent Nos 5,275,853; 5,496,910; 3,305,528, ethylene vinyl alcohol copolymers, ethylene acrylic acid copolymers, polyolefin carbon monoxide interpolymers, polyolefins, cyclic olefin copolymers (COC's), other olefin copolymers (especially polyethylene copolymers) and homopolymers (for example, those made using conventional heterogeneous catalysts), polyphenylene ether polymers (PPO) and any combination or blend thereof.

Thermoplastic polymers are well known by those skilled in the art, as well as methods for producing.

In one embodiment, the thermoplastic polymer is a rubber modified monovinylidene aromatic polymer produced by polymerizing a vinyl aromatic monomer in the presence of a dissolved elastomer or rubber. Vinyl aromatic monomers include, but are not limited to those described in U.S. patents 4,666,987, 4,572,819 and 4,585,825. Preferably, the monomer is of the formula: 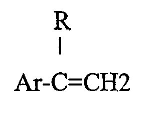 wherein R is hydrogen or methyl, Ar is an aromatic ring structure having from 1 to 3 aromatic rings with or without alkyl, halo, or haloalkyl substitution, wherein any alkyl group contains 1 to 6 carbon atoms and haloalkyl refers to a halo substituted alkyl group. Preferably, Ar is phenyl or alkylphenyl, wherein alkylphenyl refers to an alkyl substituted phenyl group, with phenyl being most preferred. Typical vinyl aromatic monomers which can be used include: styrene, alpha-methylstyrene, all isomers of vinyl toluene, especially paravinyltoluene, all isomers of ethyl styrene, propyl styrene, vinyl biphenyl, vinyl naphthalene, vinyl anthracene, and mixtures thereof. The vinyl aromatic monomers may also be combined with other copolymerizable monomers. Examples of such monomers include, but are not limited to acrylic monomers such as acrylonitrile, methacrylonitrile, methacrylic acid, methyl methacrylate, acrylic acid, and methyl acrylate; maleimide, phenylmaleimide, and maleic anhydride.

The rubber used to produce the rubber modified monovinylidene aromatic polymer can be any rubber which will enhance the impact properties of the monovinylidene aromatic polymer, including any molecular architecture such as linear, branched, star branched, and homo- and copolymer diene rubbers, block rubbers, functionalized rubbers, low cis, high cis rubbers and mixtures thereof. The elastomer or rubber preferably employed are those polymers and copolymers which exhibit a second order transition temperature which is not higher than 0°C, preferably not higher than 20°C, and more preferably not higher than 40°C as determined or approximated using conventional techniques, for example, ASTM test method D 52 T.

The rubber is typically used in amounts such that the rubber-reinforced polymer product contains from 3, preferably from 4, more preferably from 5 and most preferably from 6 to 20, preferably to 18 percent, more preferably to 16 and most preferably to 14 weight percent rubber, based on the total weight of the vinyl aromatic monomer and rubber components, expressed as rubber or rubber equivalent. The term "rubber" or "rubber equivalent" as used herein is intended to mean, for a rubber homopolymer, such as polybutadiene, simply the amount of rubber, and for a block copolymer, the amount of the copolymer made up from monomer which when homopolymerized forms a rubbery polymer, such as for a butadiene-styrene block copolymer, the amount of the butadiene component of the block copolymer.

The rubber is present as discrete rubber particles within the monovinylidene aromatic polymer matrix, and can have any type, including monomodal, bimodal or multimodal particle size distribution and particle size, as well as any morphology including cellular, core shell, and onion-skin, as well as any combinations thereof.

Polymerization processes and process conditions for the polymerization of vinyl aromatic monomers, production of rubber modified polymers thereof and the conditions needed for producing the desired average particle sizes, are well known to one skilled in the art. Although any polymerization process can be used, typical processes are continuous bulk or solution polymerizations as described in US-A-2,727,884 and US-A-3,639,372. The polymerization of the vinyl aromatic monomer is conducted in the presence of predissolved elastomer to prepare impact modified, or grafted rubber containing products, examples of which are described in US-A-3,123,655, US-A-3,346,520, US-A-3,639,522, and US-A-4,409,369. The rubber is typically a butadiene or isoprene rubber, preferably polybutadiene. Preferably, the rubber modified vinyl aromatic polymer is high impact polystyrene (HIPS) or acrylonitrile-butadiene-styrene (ABS), with HIPS being most preferred.

The thermoplastic polymer or polymer blend (A) is employed in the halogen-free ignition resistant polymer compositions of the present invention in amounts of at least 40 parts, preferably at least 50 parts by weight, preferably at least 55 parts by weight, more preferably at least 60 parts by weight, and most preferably at least 65 parts by weight based on 100 parts by weight of the halogen-free ignition resistant polymer composition of the present invention. In general, the thermoplastic polymer component (A) is employed in amounts less than or equal to 94 parts by weight, preferably less than or equal to 80 parts by weight, based on 100 parts by weight of the halogen-free ignition resistant polymer composition of the present invention.

In one embodiment, the composition of the present invention comprises a thermoplastic blend of one thermoplastic polymer and an additional thermoplastic polymer, such as a polyphenylene ether. Polyphenylene ethers are made by a variety of catalytic and non-catalytic processes from the corresponding phenols or reactive derivatives thereof. By way of illustration, certain of the polyphenylene ethers are disclosed in U.S. Pat. Nos. 3,306,874 and 3,306,875, and in Stamatoff, U.S. Pat. No. 3,257,357 and 3,257,358. In the Hay patents, the polyphenylene ethers are prepared by an oxidative coupling reaction comprising passing an oxygen-containing gas through a reaction solution of a phenol and a metal-amine complex catalyst. Other disclosures relating to processes for preparing polyphenylene ether resins, including graft copolymers of polyphenylene ethers with styrene type compounds, are found in Fox, U.S. Pat. No. 3,356,761; Sumitomo, U.K. Pat. No. 1,291,609; Bussink et al., U.S. Pat. No. 3,337,499; Blanchard et al., U.S. Pat. No. 3,219,626; Laakso et al, U.S. Pat. No. 3,342,892; Borman, U.S. Pat. No. 3,344,166; Hori et al., U.S. Pat. No. 3,384,619; Faurote et al., U.S. Pat. No. 3,440,217; and disclosures relating to metal based catalysts which do not include amines, are known from patents such as Wieden et al., U.S. Pat. No. 3,442,885 (copper-amidines); Nakashio et al., U.S. Pat. No. 3,573,257 (Metalalcoholate or -phenolate); Kobayashi et al., and U.S. Pat. No. 3,455,880 (cobalt chelates). In the Stamatoff patents, the polyphenylene ethers are produced by reacting the corresponding phenolate ion with an initiator, such as peroxy acid salt, an acid peroxide, and a hypohalite, in the presence of a complexing agent. Disclosures relating to non-catalytic processes, such as oxidation with lead dioxide, silver oxide, etc., are described in Price et al., U.S. Pat. No. 3,382,212. Cizek, U.S. Pat. No. 3,383,435 discloses polyphenylene ether-styrene resin compositions.

The polyphenylene ether resins are preferably of the type having the repeating structural formula: 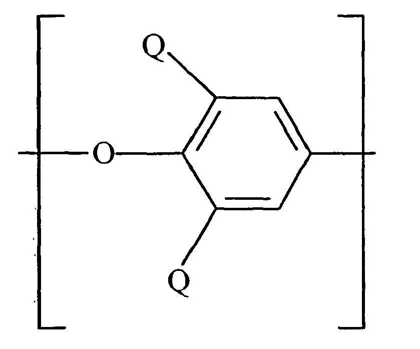 wherein the oxygen ether atom of one unit is connected to the benzene nucleus of the next adjoining unit, n is a positive integer and is at least 50, and each Q is a mono-valent substituent selected from the group consisting of hydrogen, halogen, hydrocarbon radicals free of a tertiary alpha carbon atom, halohydrocarbon radicals having at least two carbon atoms between the halogen atom and the phenyl nucleus, hydrocarbonoxy radicals and halohydrocarbonoxy radicals having at least two carbon atoms. The preferred polyphenylene ether resin is poly(2,6-dimethyl-1,4-phenylene) ether resin.

When used in combination with another thermoplastic polymer, the polyphenylene ether resin is preferably employed in the halogen-free ignition resistant polymer compositions of the present invention in amounts of at least 10 part by weight, preferably at least 12 parts by weight, more preferably at least 15 parts by weight, and most preferably at least 18 parts by weight up to 35 parts by weight, preferably 30 parts by weight, more preferably to 28 parts by weight, more preferably to 25 parts by weight, based on 100 parts by weight of the halogen-free ignition resistant polymer composition of the present invention. The thermoplastic and polyphenylene ether polymer can be prepared as a blend prior to incorporation into the composition of the present invention, or each polymer can be incorporated individually.

Component (B) in the halogen-free ignition resistant polymer composition of the present invention is a modified multi-functional epoxy resin. The modified multi-functional epoxy resin is an epoxy resin, initially having at least two epoxy groups, which has been reacted with at least one compound capable of reacting with an epoxy group (herein referred to as modifier), such that the number of initial epoxy groups is reduced and replaced with the functionality of the modifier compound. The modifiers may also be selected so as to increase the compatibility of the modified multi-functional epoxy resin with the thermoplastic polymer or blend. The modified multi-functional epoxy resin is derived from a non-halogenated multi-functional epoxy resin, or multi-functional epoxy resin substantially free of halogen. A resin which is "substantially free of halogen" means that the resin is completely free of halogen, that is, 0 percent halogen, or that the resin contains some minor amount of halogen that does not affect the properties or performance of the resin, and is not detrimental to the resin. It is understood that in some multi-functional epoxy resins there may be a very small amount of halogen impurities left from the production process. Generally, the multi-functional epoxy resin used in the present invention is a material which initially possesses (prior to reaction with a modifier compound), on average, more than 1 and preferably at least 1.8, more preferably at least 2 and most preferably more than 3 epoxy groups per molecule. After the reaction of the modifier compound with the multi-functional epoxy resin, the resultant product (the modified multi-functional epoxy resin) may contain as low as 0 weight percent of residual epoxy groups, but can contain from 0 to 10, generally from 1, preferably from 2, and more preferably from 3 to less than 10 weight percent residual epoxy groups, based on the total weight of the modified multi-functional epoxy resin.

Typical multi-functional epoxy resins which can be modified for use in the composition of the present invention include an epoxy novolac, such as D.E.N.^{™} 438 or D.E.N.^{™} 439 which are trademarks of and commercially available from The Dow Chemical Company; a dicyclopentadiene phenol epoxy novolac; an epoxidized bisphenol-A novolac, an epoxidized cresol novolac, or others found in U.S. 5,405,931 U.S. 6,291,627 AND U.S. 6,486,242, and WO 99/00451.

Epoxy novolac resins (sometimes referred to as epoxidized novolac resins, a term which is intended to embrace both epoxy phenol novolac resins and epoxy cresol novolac resins) have the following general chemical structural formula: 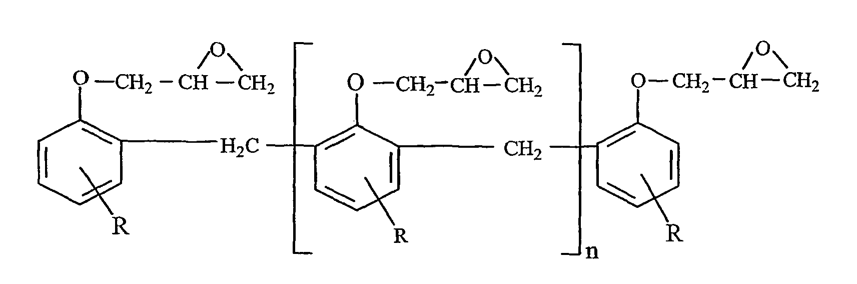 wherein "R" is hydrogen, C₁-C₃ alkylhydroxy or a C₁-C₃ alkyl, for example, methyl; and "n" is 0 or an integer from 1 to 10. "n" preferably has an average value of from 0 to 5.

Multi-functional epoxy resins are readily commercially available, for example under the trade names D.E.N.^{™} (Trademark of The Dow Chemical Company), and Quatrex^{™} and tris epoxy such as Tactix^{™} 742 (Trademarks of Ciba). The materials of commerce generally comprise mixtures of various species of the above formula and a convenient way of characterizing such mixtures is by reference to the average, n', of the values of n for the various species. Preferred multi-functional epoxy resins for use in accordance with the present invention are those epoxy novolac resins, epoxy cresol novolac and epoxidized bisphenol A novolac resins in which n has a value of from 2.05 to 10, more preferably from 2.5 to 5.

The epoxidized bisphenol A novolacs include those polymers having the following structure, wherein GLY is a glycidyl group:

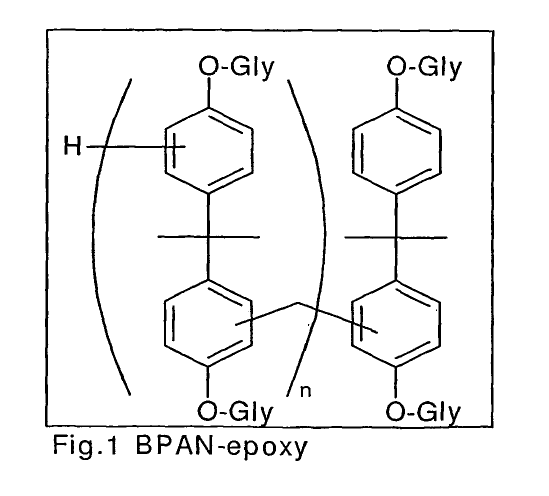

Trisepoxy resins include polymers having the structure :

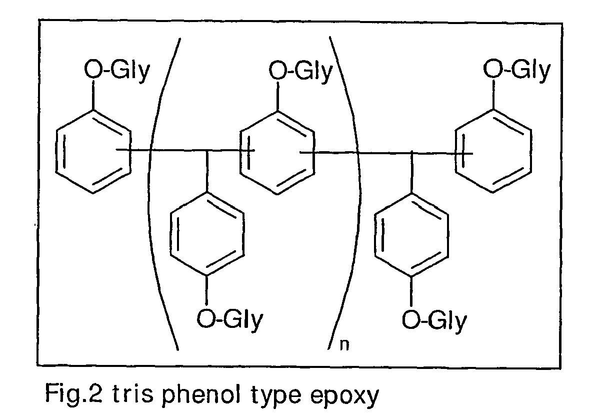

Typically, the weight average molecular weight (Mw) of the multi-functional epoxy resin is dependent upon the thermoplastic polymer used in the composition of the present invention and is generally from 150, preferably from 250, more preferably from 350 and most preferably from 450 to 100,000, generally to 50,000, typically to 25,000, preferably to 8,000, and more preferably to 5,000 atomic mass units (amu).

The modifiers used to modify multi-functional epoxy resins are compounds containing reactive groups, which will react with epoxy functionalities, such as a phenolic group, for example, phenolic compounds such as 2-phenylphenol, 4-phenylphenol, dimethyl phenol, tertial buthylphenol, bisphenol-a, bisphenol-f; polyisocyanates such as methylene diphenyl diisocyanate and toluenediisocyanates, an acid group, acidic compounds such as salicylic acid, an amino group such as sulfanilamide; an acid anhydride group such as succinic acid anhydride, dodecenylsuccinic anhydride; or any non-phosphorous containing group which can react with the epoxy groups of the non-halogenated multi-functional epoxy resin compound. Other modifiers include compound containing functionalities which will enhance the mechanical properties of the composition and are compatible with the thermoplastic resin. For thermoplastic resins such as monovinylidene aromatics and conjugated dienes, such functionalities might include, but not be limited to, butadienes, styrene-maleic anhydrides, polyisocyanates such as methylene diphenyl diisocyanate and toluenediisocyanate, polybutadiene-maleic anhydride copolymers, carboxylic acid terminated butadienes, and carboxylic acid functionalized polystyrenes. Any combination of modifiers can be used in modifying the multi-functional epoxy resins.

The modifier compound may contain on average, one or more than one functionality capable of reacting with the epoxy groups per molecule. Such modifier compound preferably contains on average 0.8 to 5, more preferably 0.9 to 4, and most preferably 1 to 3 functional groups per molecule, capable of reacting with epoxy resin.

The modified multi-functional epoxy resin can be generally produced by any method, but is typically obtained by heating the multi-functional epoxy resins and the modifier to above 80 °C in the presence of catalysts (amine, acid, phosphonium or ammonium catalysts) as is well known in the art.

The amount of modified multi-functional epoxy resin in the halogen-free ignition resistant polymer composition of the present invention will depend upon the thermoplastic polymer used in the composition and is typically at least 1 weight percent, generally at least 5 weight percent, preferably at least 10 weight percent, more preferably at least 15 weight percent and most preferably at least 20 weight percent and less than 30 weight percent, preferably less than 28 weight percent, more preferably less than 25 weight percent and most preferably less than 20 weight percent, based on the total weight of the halogen-free ignition resistant polymer composition.

A phosphorus element containing compound is also included in the composition of the present invention. These compounds would be non-epoxy containing phosphorus element containing compounds. Suitable phosphorous compounds employed in the halogen-free ignition resistant polymer composition of the present invention as component (C) are organophosphorous compounds which include organophosphates, organophosphonites, organophosphonates, organophosphites, organophosphinites, organophosphinates, other phosphorus element-containing compounds such as 9,10-dihydro-9-oxa-10-phosphaphenanthrene-10-oxide (DOP); 10-(2',5'-dihydroxyphenyl)-9,10-dihydro-9-oxa-10-phosphaphenanthrene-10-oxide (DOP-HQ); bis(4-hydroxyphenyl)-phosphine oxide; tris(2-hydroxyphenyl)phosphine oxide; dimethyl-1-bis(4-hydroxyphenyl)-1-phenylmethylphonate; tris(2-hydroxy-4/5-methylphenyl)phosphine oxide tris(4-hydroxyphenyl)phosphine oxide, bis(2-hydroxyphenyl)phenylphosphine oxide, bis(2-hydroxyphenyl)phenylphosphinate, tris(2-hydroxy-5-methylphenyl)phosphine oxide; or mixtures thereof, as further described herein below.

Suitable organophosphorous compounds are disclosed, for example, in U.S. Patents Re. 36,188; 5,672,645; and 5,276,077. A preferred organophosphorous compound is a monophosphorous compound represented by Formula I: 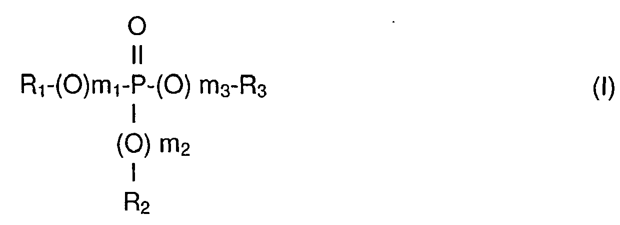 wherein R₁, R₂, and R₃, each represent an aryl or an alkaryl group chosen independently of each other and m₁, m₂, and m₃ each independently of each other are 0 or 1.

Most preferred monophosphorous compounds are monophosphates where m₁, m₂, and m₃ are all 1 and R₁, R₂, and R₃ are independently methyl, phenyl, cresyl, xylyl, cumyl, naphthyl, for example, trimethyl phosphate, triphenyl phosphate, all isomers of tricresyl phosphate and mixtures thereof, especially tri(4-methylphenyl) phosphate, all isomers of trixylyl phosphate and mixtures thereof, especially tri(2,6-dimethylphenyl) phosphate, tricresyl phosphate, all isomers of tricumyl phosphate and mixtures thereof, and trinaphthyl phosphate, or mixtures thereof.

Another preferred organophosphorous compound is an multiphosphorous compound represented by Formula II: 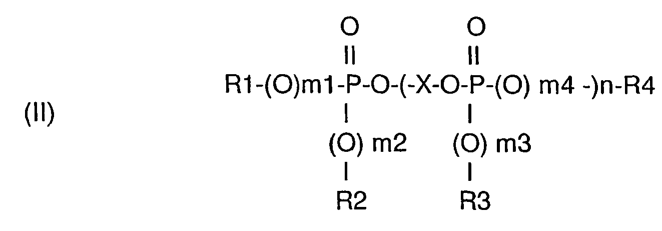 wherein R₁, R₂, R₃, and R₄ each represent an aryl or an alkaryl group chosen independently of each other, X is an arylene group derived from a dihydric compound, m₁, m₂, m₃, and m₄ each independently of each other are 0 or 1 and n has an average value greater than 0 and less than 10, when n is equal to or greater than 1. These multiphosphorous compounds are sometimes referred to as oligomeric phosphorous compounds.

Preferred multiphosphorous compounds are multiphosphates where m₁, m₂, m₃, and m₄ are 1, R₁, R₂, R₃, and R₄ are independently methyl, phenyl, cresyl, xylyl, cumyl, naphthyl, X is an arylene group derived from a dihydric compound, for example, resorcinol, hydroquinone, bisphenol A, and n has an average value greater than 0 and less than 5, preferably n has an average value greater than 1 and less than 5. For example preferred oligomeric phosphates having an n value between 1 and 2 are m-phenylene-bis(diphenylphosphate), p-phenylene-bis(diphenylphosphate), m-phenylene-bis(dicresylphosphate), p-phenylene-bis(dicresylphosphate), m-phenylene-bis(dixylylphosphate), p-phenylene-bis(dixylylphosphate), bisphenol-A-bis(diphenylphosphate), bisphenol A-bis(dicresylphosphate), bisphenol A-bis(dixylylphosphate), or mixtures thereof.

The phosphorous compound component (C) is employed in the halogen-free ignition resistant polymer compositions of the present invention in amounts of at least 5, preferably at least 7 and more preferably at least 10 percent by weight, based on 100 parts by weight of the halogen-free ignition resistant polymer composition of the present invention, and in amounts of up 30, preferably up to 27, more preferably up to 25, more preferably up to 23, and more preferably up to 20 weight percent, based on the total weight of the halogen-free ignition resistant polymer composition.

In addition, the halogen-free ignition resistant polymer compositions may also optionally contain one or more additives that are commonly used in polymer compositions of this type. Preferred additives of this type include, but are not limited to: antioxidants; impact modifiers, such as styrene-butadiene rubbers; plasticizers, such as mineral oil; antistats; flow enhancers; mold releases; pigments; wetting agents; fluorescent additives; fillers, such as calcium carbonate, calcium hydroxide, magnesium hydroxide, talc, clay, mica, wollastonite, hollow glass beads, titanium oxide, silica, carbon black, glass fiber, potassium titanate, single layers of a cation exchanging layered silicate material or mixtures thereof, and perfluoroalkane oligomers and polymers (such as polytetrafluoroethylene) for improved drip performance in UL 94, halogen-free physical and chemical blowing agents including carbon dioxide. Further, compounds which stabilize ignition resistant polymer compositions against degradation caused by, but not limited to heat, light, and oxygen, or a mixture thereof may be used. Although small amounts of halogen containing additives can be used, it is preferred that the composition be halogen free, wherein the composition does not contain any halogen at levels above 0.1 weight percent, based on the total weight of the composition. If used, the amount of such additives will vary and need to be controlled depending upon the particular need of a given end-use application, which can easily and appropriately exercised by those skilled in the art.

In one embodiment, the composition of the present invention can be utilized in the preparation of a foam. The halogen-free ignition resistant polymer composition is extruded into foam by melt processing it with a blowing agent to form a foamable mixture, extruding said foamable mixture through an extrusion die to a region of reduced pressure and allowing the foamable mixture to expand and cool. Conventional foam extrusion equipment, such as screw extruders, twin screw extruders and accumulating extrusion apparatus can be used. Suitable processes for making extruded foams from resin/blowing agent mixtures are described in U.S. Pat. Nos. 2,409,910; 2,515,250; 2,669,751; 2,848,428; 2,928,130; 3,121,130; 3,121,911; 3,770,688; 3,815,674; 3,960,792; 3,966,381; 4,085,073; 4,146,563; 4,229,396; 4,302,910; 4,421,866; 4,438,224; 4,454,086 and 4,486,550.

The blowing agent is preferably a halogen-free physical or chemical blowing agent and may be incorporated or mixed into the polymer material by any convenient means. Most typically, a physical blowing agent is fed under pressure into the barrel of an extruder where it mixes with the molten polymer. However, such mixing may be accomplished by a variety of other means including so-called static mixers or interfacial surface generators such as are described in U.S. Pat. Nos. 3,751,377 and 3,817,669. Chemical blowing agents can be mixed with the polymer beforehand or fed into the extruder together with the polymer. The polymer/blowing agent mixture is then heated to a temperature above the boiling (in the case of a physical blowing agent) or decomposition (in the case of a chemical blowing agent) temperature of the blowing agent, under sufficient pressure that the resulting foamable mixture does not expand until it is forced through the extrusion die. Typically, the foamable mixture is cooled in the extruder, other mixing device or in a separate heat exchanger to a foaming temperature that permits the formation of a foam having the desired density and desired cell size to an optimum foaming temperature. The foamable mixture is then passed through the die into an area of reduced pressure and temperature zone where the foam expands and cools to form a cellular structure.

The foam can be extruded into any variety of shapes, but will most commonly be extruded to form sheet (nominal thickness of 13 mm or less) or plank (nominal thickness over 13 mm) products. Sheet products are conveniently made using a circular die, producing a tubular foam that is slit to form a flat sheet. Plank products are conveniently made using a rectangular or "dog-bone" die.

Suitable physical blowing agents include carbon dioxide, nitrogen, lower alkanols, alkyl ethers, water, and/or hydrocarbons, especially alkanes having up to six carbon atoms. Hydrocarbon blowing agents include methane, ethane, propane, n-butane, isobutane, n-pentane, isopentane, neopentane, cyclobutane and cyclopentane. Alcohols include methanol, ethanol, n-propanol and isopropanol. Suitable alkyl ethers include dimethyl ether, diethyl ether and methyl ethyl ether. Mixtures of two or more of these physical blowing agents can be used.

Suitable chemical blowing agents include azodicarbonamide, azodiisobutyronitrile, benzenesulfo- hydrazide, 4,4-oxybenzene sulfonyl semi-carbazide, p-toluene sulfonyl semi-carbazide, barium azodicarboxylate, N,N'-dimethyl-N,N'-dinitrosoterephthalamide, trihydrazino triazine and sodium bicarbonate.

Although the present invention relates to a halogen-free ignition resistant composition, it should be noted that halogenated blowing agents would also perform adequately in order to produce a foam. However, preferably, a non-halogenated blowing agent is employed.

In one embodiment, a blowing agent mixture of a non-halogenated blowing agent mixture comprising a lower alcohol having from 1 to 4 carbon atoms, alkyl ether, alkyl ester, hydrocarbons, water (up to 50 percent) and carbon dioxide is used.

Various auxiliary materials can be used in the foaming process. Common such auxiliary materials include cell control agents (nucleators), cell enlarging agents, stability control agents (permeability modifiers), antistatic agents, crosslinkers, processing aids (such as slip agents), stabilizers, flame retardants, ultraviolet absorbers, acid scavengers, dispersion aids, extrusion aids, antioxidants, colorants, and inorganic fillers. Cell control agents and stability control agents are preferred.

Preferred cell control agents include finely divided inorganic substances such as calcium carbonate, calcium silicate, indigo, talc, clay, titanium dioxide, silica, calcium stearate or diatomaceous earth, as well as small amounts of chemicals that react under extrusion conditions to form a gas, such as a mixture of citric acid or sodium citrate and sodium bicarbonate. The amount of nucleating agent employed may range from 0.01 to 5 parts by weight per hundred parts by weight of a polymer resin. The preferred range is from 0.1 to 3 parts by weight.

When the foam is to be used as thermal insulation, additives that attenuate the infrared transmission through the foam structure can be incorporated to augment its insulation performance, even when the blowing agent includes an insulating gas. Examples of IR attenuators include carbon black materials, graphite, titanium dioxide, and aluminum particles. When IR attenuators are used, a reduced proportion of an insulating blowing agent can be used.

The foam may be subjected to various subsequent processing steps if desired. It is often desired to cure the foam (that is, replace the blowing agent in the cells with air). Process steps intended to reduce the curing time include perforation, as described in U. S. Patent No. 5,424,016, heating the foam at slightly elevated (100-130°F) temperatures for a period of days to weeks, or combinations thereof. In addition, the foam may be crushed in order to open cells. Crosslinking steps may also be performed.

Preparation of the halogen-free ignition resistant polymer composition of the present invention can be accomplished by any suitable mixing means known in the art, including dry blending the individual components and subsequently melt mixing, either directly in the extruder used to make the finished article or pre-mixing in a separate extruder. Dry blends of the compositions can also be directly injection molded without pre-melt mixing.

The halogen-free ignition resistant polymer compositions of the present invention, and polymers comprised therein, are thermoplastic polymers. When softened or melted by the application of heat, the halogen-free ignition resistant polymer composition of this invention can be formed or molded using conventional techniques such as compression molding, injection molding, gas assisted injection molding, calendering, vacuum forming, thermoforming, extrusion and/or blow molding, alone or in combination. The halogen-free ignition resistant polymer composition can also be formed, spun, or drawn into films, fibers, multi-layer laminates or extruded sheets, or can be compounded with one or more organic or inorganic substances, on any machine suitable for such purpose.

In one embodiment, the present invention is a halogen-free ignition resistant polymer composition consisting essentially of:
A) a thermoplastic polymer or polymer blend, and
B) a modified multi-functional epoxy resin containing from 0-20 wt. percent residual epoxy groups, based on the total weight of the epoxy resin, and,
C) a phosphorus containing compound.

In another embodiment, the present invention is a halogen-free ignition resistant polymer composition consisting essentially of:
A) 40-94 weight percent, based on the total weight of the composition, of a thermoplastic polymer, which can optionally comprise 10-35 weight percent, based on the total weight of the composition, of a polyphenylene ether polymer such as polyphenylene oxide (PPO),
B) 1-30 weight percent, based on the total weight of the composition, of an modified multi-functional epoxy resin containing from 0-20 wt. percent residual epoxy groups, based on the total weight of the epoxy resin, and,
C) 5-30 weight percent, based on the total weight of the composition, of a phosphorus compound such as an aryl phosphate.

The phrase 'consisting essentially of' means that the listed components are essential, although other materials can be present in minor amounts which do not significantly alter the properties or purpose of the present composition. Preferably, the composition of the present invention does not contain thermosetting polymers.

The halogen-free ignition resistant polymer compositions of the present invention are useful to fabricate numerous useful articles and parts. Some of the articles which are particularly well suited include television cabinets, computer monitors, related printer housings which typically requires to have excellent flammability ratings. Other applications include automotive and small appliances.

The following examples are provided to illustrate the present invention. The examples are not intended to limit the scope of the present invention and they should not be so interpreted. Amounts are in weight parts or weight percentages unless otherwise indicated.

Flammability ratings were obtained by testing under UL-94 vertical (V) or UL-94 horizontal (HB) flammability test. For the vertical burning test, five test specimens, of a desired thickness measuring 12.5 millimeter (mm) by 125mm, suspended vertically over surgical cotton were ignited by a 18.75mm Bunsen burner flame; two ignitions of 10 seconds each were applied to the samples. The rating criteria included the sum of after-flame times after each ignition, glow time after the second ignition, and whether the bar drips flaming particles that ignited the cotton.

Melt flow rate was determined according to ASTM D1238
Izod was determined according to ASTM D256
Tensile was determined according to ASTM D638
Percent Elongation was determined according to ASTM D638
Vicat was determined according to ASTM D1525

### Production procedure for modified epoxy novolak resin

The modified epoxy novolak resin was prepared in a 10 L steel reactor, equipped with a mechanical stirrer, a heating jacket, fitted with a N2 inlet and a condenser. DEN 438 (Dow Epoxy Novolak) (57 wt. percent) was contacted with 2-phenyl phenol (43 wt. percent) at a temperature between 125 and 185°C. Approximately 20-30 percent of the phenol was charged to the reactor with the epoxy novolac and heated to 110 °C. Approximately 1000 ppm of triphenylethylphosphonium acetate catalyst based on total solid components was added to the resin and heated up to 130 °C. The rest of the modifier compound was added into the reaction mixture portion by portion so that the temperature of the reaction mixture could be controlled below 185 °C. After all of the modifier compound was added, the temperature of the reaction mixture was held for approximately 30 min at 175 °C and the product was flaked as a solid. The final product had an epoxy content of 2.83 percent, a melt viscosity of 0.20 Pa.s at 150°C and a resin Tg of 45/43°C.

A composition of high impact polystyrene (HIPS, Mw 185,000, rubber content 10.5 percent, monomodal distribution (mean of 2 microns), 0.3 weight percent mineral oil), polyphenylene oxide and modified epoxy novolak (prepared above, DEN/OPP) was melt blended and injection molded. The products were compounded on a Werner-Phleiderer 30 mm twin screw extruder, with zone temperatures of 125, 180, 245, 250 and 260 degrees C. Samples were injection molded on a DeMag injection molder, zone temperatures were 226, 226, 230 and 230 degrees C, and the mold temperature was 54 degrees C.

| | | Comp. Example | Example I | Comp Example | Comp. Example |
|---|---|---|---|---|---|
| Wt. percent HIPS | | 60 | 55 | 55 | 55 |
| Wt. percent PPO | | 22 | 22 | 22 | 22 |
| Wt. percent FP-500 | | 18 | 18 | 18 | 18 |
| Epoxy wt. percent | | 0 | 5 | 5 | 5 |
| Epoxy | | -- | DEN/OPP | Novolak | Epoxy Novolak |
| Melt Flow Rate | (g/10 min) | 3.8 | 5.6 | 4.4 | 4.2 |
| Izod | (ft lbs/inch) | 2.2 | 1.7 | 1.4 | 1.2 |
| | (J/m) | 115 | 90 | 75 | 65 |
| Tensile Yield | (psi) | 5878 | 4245 | 5560 | 5790 |
| | (MPa) | 40 | 29 | 38 | 40 |
| Percent Elongation | | 8 | 19 | 11 | 4 |
| Vicat(°C) | | 96 | 93 | 103 | 93 |
| Flaming Drips | | 5/5 | 0/10 | 0/10 | 0/10 |
| UL Rating 2.5 mm | | V-2 | V-0 | V-0 | V-0 |

| | | | | | |
|---|---|---|---|---|---|
| DEN=Dow Epoxy Novolak 438 OPP was 2-phenylphenol FP-500 was a diphosphate available from Daihachi Chemical. Novolac was a Bakelite product, product number is 0790K03 Epoxy Novolac was a multifunctional epoxy novolac having a functionality average of 5.5 and an epoxy equivalent weight of 187. | | | | | |

Further compositions can similarly be prepared generally according to the process described above to provide compositions that are summarized and evaluated as shown in the Table using the following test methods:
Melt flow rate (MFR) is determined according to ISO 1183.
Izod is determined according to ISO 180.
Tensile yield (Ty), tensile Modulus and percent Elongation are determined according to ISO 527.
The Heat Distortion Temperature (HDT) is determined according to ISO 75 under conditions of 1.8 Mpa and 120 °C per hour.

In these experiments the PPO component used was Asahi N-2245 brand resin that is a blend of approximately 70 percent polyphenylene oxide polymer (PPO) and about 30 percent of a blend of polystyrene and rubber that is considered to be a part of the overall HIPS component in the table below. The HIPS Feedstock Resin referred to in the table below is the high impact polystyrene resin described and used in the above Experiment. In these compositions the phosphorous-containing compounds are BAPP which is Bisphenol A bis(diphenyl phosphate) and RDP which is Resorcinol Bis(diphenylphosphate). The modified epoxy resin is a modified epoxy novolac resin prepared as described in the above experiments and is reaction product of ortho phenyl phenol with Dow Epoxy Novolak (DEN 438). The results shown for Sample Compositions 7 and 8 below are based on compositional and property modeling techniques known to those skilled in the art.

| **Sample Composition** | | 2 | 3 | 4 | 5 | 6 | 7 | 8 |
|---|---|---|---|---|---|---|---|---|
| **Wt percent HIPS Feedstock** | | 40.8 | 39.6 | 43 | 36.8 | 31 | 33.3 | 19.3 |
| **Total Wt percent HIPS^{*}** | | 51.9 | 49.6 | 53 | 47.8 | 44 | 43.3 | 34.3 |
| **Wt percent Asahi N-2245** | | 37.1 | 34.3 | 32.9 | 37.1 | 42.9 | 38.6 | 48.6 |
| **Wt percent PPO percent** | | 26.0 | 24.0 | 23.0 | 26.0 | 30.0 | 28.0 | 34.0 |
| **Wt percent Modified Epoxy Novolac Resin** | | 5 | 5 | 5 | 5 | 5 | 5 | 5 |
| **Polyphosphate** | | RDP | BAPP | BAPP | BAPP | BAPP | BAPP | BAPP |
| **Wt percent Phosphate** | | 17 | 21 | 19 | 21 | 21 | 23 | 27 |
| **Teflon 6-CN percent** | | 0.1 | 0.1 | 0.1 | 0.1 | 0.1 | 0.1 | 0.1 |
| **Sample Properties** | | | | | | | | |
| **MFR** | **(g/10 min)** | 9.3 | 11.2 | 10 | 9.9 | 9.0 | 9 | 5.0 |
| **Izod** | **(J/m)** | 103 | 81 | 80 | 80 | 70 | 65 | 50 |
| **Ty** | **(MPa)** | 38.5 | 43.8 | 40 | 45.1 | 48.7 | 46 | 50 |
| **Elongation** | **(percent)** | 55 | 49 | 50 | 42 | 32 | 25 | 15 |
| **Modulus** | **(MPa)** | 2271 | 2500 | 2450 | 2520 | 2580 | 2550 | 2650 |
| **HDT** | **(°C)** | 59.7 | 61.5 | 62 | 61.5 | 64.2 | 62 | 67 |
| **Sp. Dens** | **(kg/l)** | 1.112 | 1.112 | 1.114 | 1.113 | 1.115 | 1.124 | 1.132 |
| **UL V-94 Flammability Rating (3.0 mm)** | | V1 | V1 | V1 | V0 | V0 | V0 | V0 |

| | | | | | | | | |
|---|---|---|---|---|---|---|---|---|
| *** Total HIPS component including the blend of polystyrene and rubber contained in the Asahi N-2245.** | | | | | | | | |

## Claims

1. A halogen-free ignition resistant polymer composition comprising:
A) a thermoplastic polymer or polymer blend, and
B) a modified multi-functional epoxy resin which is the reaction product of a multi-functional epoxy resin, with an epoxy modifier which is a phenolic compound, a polyisocyanate, an acidic compound, an acid anhydride, or a compound containing an amino group; wherein the reaction product contains from 0 to less than 10 wt. percent residual epoxy groups, based on the total weight of the modified epoxy resin, and
C) a phosphorus containing compound.

2. The halogen-free ignition resistant polymer composition of Claim 1, wherein A) is selected from the group consisting of : polymers produced from a vinyl aromatic monomer or hydrogenated versions thereof, polycarbonate, acrylonitrile-butadiene-styrene copolymer/polycarbonate compositions, hydroxy phenoxy ether polymers, polyphenylene ether polymers, polyethylene terephthalate, epoxy resins, ethylene vinyl alcohol copolymers, ethylene acrylic acid copolymers, polyolefin carbon monoxide interpolymers, polyolefins, cyclic olefin copolymers, olefin copolymers and homopolymers, polyphenylene oxide and any combination thereof.

3. The halogen-free ignition resistant polymer composition of Claim 2, wherein A) is selected from styrene-butadiene block copolymers, polystyrene, high impact polystyrene, acrylonitrile-butadiene-styrene copolymers, and styrene-acrylonitrile copolymers.

4. The halogen-free ignition resistant polymer composition of Claim 1, wherein A) is from 40 to 94 weight percent; B) is from 1 to 30 weight percent; and C) is from 5 to 30 weight percent of the total weight of the halogen-free ignition resistant polymer composition

5. The halogen-free ignition resistant polymer composition of Claim 1 wherein B) is a modified multi-functional epoxy resin derived from a multi-functional epoxy resin selected from the following structures: 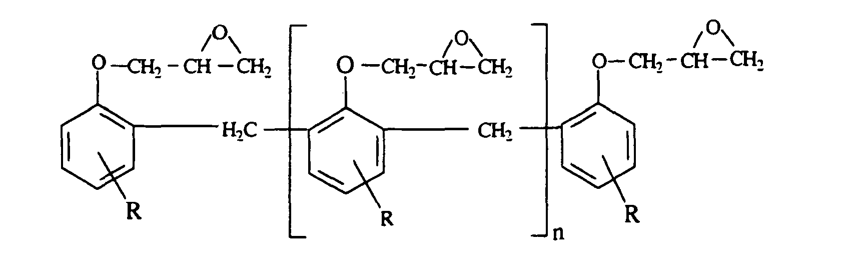 wherein "R" is hydrogen, C₁-C₃ alkylhydroxy or a C₁-C₃ alkyl, for example, methyl; and "n" is 0 or an integer from 1 to 10; 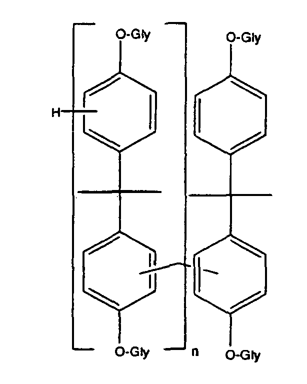 Wherein Gly is a glycidyl group; and

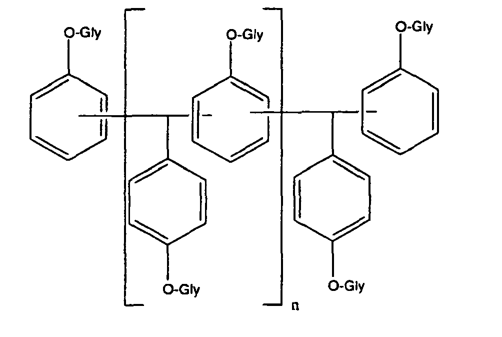

6. The halogen-free ignition resistant polymer composition of Claim 1 wherein the modified multi-functional epoxy resin is a material produced from an epoxy resin which possesses, on average, more than 1 epoxy group per molecule.

7. The halogen-free ignition resistant polymer composition of Claim 1 wherein
the modified multi-functional epoxy resin is functionally modified with more than one modifier.

8. The halogen-free ignition resistant polymer composition of Claim 1 wherein the epoxy modifier is 2-phenylphenol, 4-phenylphenol, dimethyl phenol, tertial buthylphenol, bisphenol-a, bisphenol-f, methylene diphenyl diisocyanate, a toluenediisocyanate; salicylic acid, sulphanilamide, succinic acid anhydride, or dodecenylsuccinic anhydride.

9. The halogen-free ignition resistant polymer composition of Claim 1 consisting essentially of:
A) from 40 to 94 weight percent, based on the total weight of the composition, of a thermoplastic polymer, optionally comprising 10-35 weight percent, based on the total weight of the composition, of a polyphenylene ether polymer;
B) from 1 to 30 weight percent, based on the total weight of the composition, of the modified multi-functional epoxy resin; and
C) from 5 to 30 weight percent, based on the total weight of the composition, of the phosphorus compound.

10. The halogen-free ignition resistant polymer composition of Claim 9, wherein the phosphorus compound is an aryl phosphate.

11. The halogen-free ignition resistant polymer composition of Claim 9, wherein the thermoplastic polymer of A) is selected from polymers produced from a vinyl aromatic monomer or hydrogenated versions thereof, polycarbonate, acrylonitrile-butadiene-styrene/polycarbonate compositions, polyphenylene ether resin, hydroxy phenoxy ether polymers, polyethylene terephthalate, epoxy resins, ethylene vinyl alcohol copolymers, ethylene acrylic acid copolymers, polyolefin carbon monoxide interpolymers, polyolefins, cyclic olefin copolymers, olefin copolymers and homopolymers and any combination thereof.

12. The halogen-free ignition resistant polymer composition of Claim 9, wherein the thermoplastic polymer of A) is selected from styrene-butadiene block copolymers, polystyrene, high impact polystyrene, acrylonitrile-butadiene-styrene (ABS) copolymers, and styrene-acrylonitrile copolymers.

13. The halogen-free ignition resistant polymer composition of Claim 9 wherein the modified multi-functional epoxy resin is a material produced from an epoxy resin which possesses, on average more than 1 epoxy group per molecule.

14. The halogen-free ignition resistant polymer composition of Claim 9 wherein the modified multi-functional epoxy resin is a functionally modified with more than one modifier.

15. An article produced from the halogen-free ignition resistant polymer composition of any one of Claims 1 to Claim 14.

## Patentansprüche

1. Halogenfreie flammbeständige Polymerzusammensetzung, enthaltend:
A) ein thermoplastisches Polymer oder ein thermoplastisches Polymerblend und
B) ein modifiziertes multifunktionelles Epoxyharz, das das Reaktionsprodukt eines multifunktionellen Epoxyharzes mit einem Epoxymodifikationsmittel ist, das eine phenolische Verbindung, ein Polyisocyanat, eine saure Verbindung, ein Säureanhydrid oder eine Verbindung, die eine Aminogruppe enthält, ist, wobei das Reaktionsprodukt 0 bis weniger als 10 Gew.-% restliche Epoxygruppen, bezogen auf das Gesamtgewicht des modifizierten Epoxyharzes, enthält und
C) eine phosphorhaltige Verbindung.

2. Halogenfreie flammbeständige Polymerzusammensetzung nach Anspruch 1, worin A) ausgewählt ist aus der Gruppe bestehend aus Polymeren, die aus einem aromatischen Vinylmonomer hergestellt ist, oder hydrierten Versionen davon, Polycarbonat, Acrylnitril-Butadien-Styrol-Copolymerl Polycarbonatzusammensetzungen, Hydroxyphenoxyetherpolymeren, Polyphenylen-Ether-Polymeren, Polyethylenterephthalat, Epoxyharzen, Ethylen-Vinylalkohol-Copolymeren, Ethylen-Acrylsäure-Copolymeren, Polyolefin-Kohlenmonoxid-Interpolymeren, Polyolefinen, cyclischen Olefincopolymeren, Olefincopolymeren und -homopolymeren, Polyphenylenoxid und jeder Kombination davon.

3. Halogenfreie flammbeständige Polymerzusammensetzung nach Anspruch 2, worin A) ausgewählt ist aus Styrol-Butadien-Blockcopolymeren, Polystyrol, schlagzähem Polystyrol, Acrylnitril-Butadien-Styrol-Copolymeren und Styrol-Acrylnitril-Copolymeren.

4. Halogenfreie flammbeständige Polymerzusammensetzung nach Anspruch 1, worin A) 40 bis 94 Gew.-%, B) 1 bis 30 Gew.-% und C) 5 bis 30 Gew.-% des Gesamtgewichts der halogenfreien flammbeständigen Polymerzusammensetzung beträgt.

5. Halogenfreie flammbeständige Polymerzusammensetzung nach Anspruch 1, worin B) ein modifiziertes multifunktionelles Epoxyharz ist, das sich von einem multifunktionellen Epoxyharz ableitet, das aus den folgenden Strukturen ausgewählt ist: 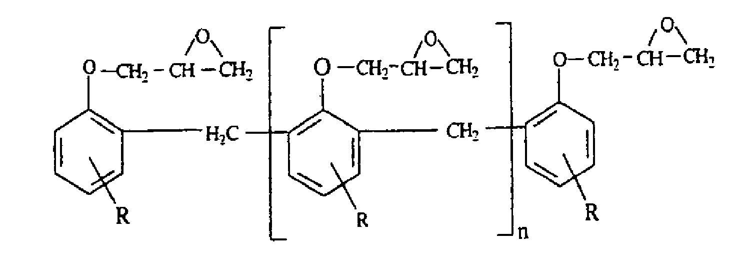 worin "R" gleich Wasserstoff, C₁- bis C₃-Alkylhydroxy oder ein C₁- bis C₃-Alkyl, z.B. Methyl, ist, und "n" gleich 0 oder eine ganze Zahl von 1 bis 10 ist; 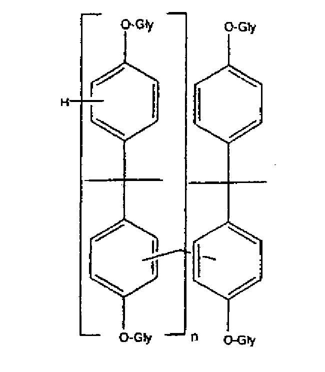 worin Gly eine Glycidylgruppe ist, und

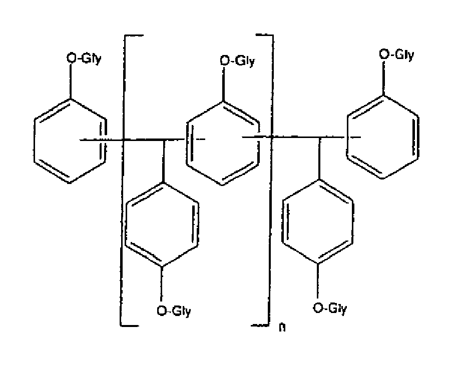

6. Halogenfreie flammbeständige Polymerzusammensetzung nach Anspruch 1, wobei das modifizierte multifunktionelle Epoxyharz ein Material ist, das aus einem Epoxyharz hergestellt ist, das durchschnittlich mehr als eine Epoxygruppe pro Molekül besitzt.

7. Halogenfreie flammbeständige Polymerzusammensetzung nach Anspruch 1, worin das modifizierte multifunktionelle Epoxyharz funktionell mit mehr als einem Modifikationsmittel modifiziert ist.

8. Halogenfreie flammbeständige Polymerzusammensetzung nach Anspruch 1, worin das Epoxymodifikationsmittel 2-Phenylphenol, 4-Phenylphenol, Dimethylphenol, tert.-Buthylphenol, Bisphenol-A, Bisphenol-F, Methylendiphenyldiisocyanat, ein Toluoldiisocyanat, Salicylsäure, Sulfanilamid, Bernsteinsäureanhydrid oder Dodecenylbernsteinsäureanhydrid ist.

9. Halogenfreie flammbeständige Polymerzusammensetzung nach Anspruch 1, die im Wesentlichen besteht aus:
A) 40 bis 94 Gew.-%, bezogen auf das Gesamtgewicht der Zusammensetzung, eines thermoplastischen Polymers, das optional 10 bis 35 Gew.-%, bezogen auf das Gesamtgewicht der Zusammensetzung, eines Polyphenyletherpolymers enthält;
B) 1 bis 30 Gew.-%, bezogen auf das Gesamtgewicht der Zusammensetzung, des modifizierten multifunktionellen Epoxyharzes und
C) 5 bis 30 Gew.-%, bezogen auf das Gesamtgewicht der Zusammensetzung, der Phosphorverbindung.

10. Halogenfreie flammbeständige Polymerzusammensetzung nach Anspruch 9, worin die Phosphorverbindung ein Arylphosphat ist.

11. Halogenfreie flammbeständige Polymerzusammensetzung nach Anspruch 9, worin das thermoplastische Polymer A) ausgewählt ist aus Polymeren, die aus einem vinylaromatischen Monomer hergestellt sind, oder hydrierten Versionen davon, Polycarbonat, Acrylnitril-Butadien-Styrol/Polycarbonatzusammensetzungen, Polyphenylenetherharz, Hydroxyphenoxyetherpolymeren, Polyethylenterephthalat, Epoxyharzen, Ethylen-Vinylalkohol-Copolymeren, Ethylen-Acrylsäure-Copolymeren, Polyolefin-Kohlenmonoxid-Interpolymeren, Polyolefinen, cyclischen Olefincopolymeren, Olefincopolymeren und -homopolymeren und jeder Kombination davon.

12. Halogenfreie flammbeständige Polymerzusammensetzung nach Anspruch 9, worin das thermoplastische Polymer A) ausgewählt ist aus Styrol-Butadien-Blockcopolymeren, Polystyrol, schlagzähem Polystyrol, Acrylnitril-Butadien-Styrol(ABS)-Copolymeren und Styrol-Acrylnitril-Copolymeren.

13. Halogenfreie flammbeständige Polymerzusammensetzung nach Anspruch 9, worin das modifizierte multifunktionelle Epoxyharz ein Material ist, das aus einem Epoxyharz hergestellt ist, das durchschnittlich mehr als eine Epoxygruppe pro Molekül besitzt.

14. Halogenfreie flammbeständige Polymerzusammensetzung nach Anspruch 9, worin das modifizierte multifunktionelle Epoxyharz funktionell mit mehr als einem Modifikationsmittel modifiziert ist.

15. Gegenstand, hergestellt aus der halogenfreien flammbeständigen Polymerzusammensetzung nach einem der Ansprüche 1 bis 14.

## Revendications

1. Composition polymère non halogénée résistant à l'inflammation contenant :
A) un polymère thermoplastique ou un mélange de polymères, et
B) une résine époxy multi-fonctionnelle modifiée qui est le produit de la réaction d'une résine époxy multi-fonctionnelle avec un modificateur d'époxyde qui est un composé phénolique, un polyisocyanate, un composé acide, un anhydride acide, ou un composé contenant un groupe amino ; dans laquelle le produit de la réaction contient 0% à moins de 10% en poids de groupes époxyde résiduels, par rapport au poids total de la résine époxy modifiée, et
C) un composé contenant du phosphore.

2. Composition polymère non halogénée résistant à l'inflammation selon la revendication 1, dans laquelle A) est choisi dans le groupe constitué par : les polymères obtenus à partir d'un monomère vinylaromatique ou de versions hydrogénées de celui-ci, le polycarbonate, les compositions de copolymère acrylonitrile/butadiène/ styrène-polycarbonate, les polymères d'éther hydroxyphénoxy, les polymères de polyéther de phénylène, le polytéréphtalate d'éthylène, les résines époxy, les copolymères éthylène/alcool vinylique, les copolymères éthylène/acide acrylique, les interpolymères polyoléfine/ monoxyde de carbone, les polyoléfines, les copolymères d'oléfines cycliques, les copolymères et les homopolymères d'oléfines, le poly(oxyde de phénylène) et une de leurs combinaisons.

3. Composition polymère non halogénée résistant à l'inflammation selon la revendication 2, dans laquelle A) est choisi parmi les copolymères séquencés styrène/ butadiène, le polystyrène, le polystyrène à haute résistance au choc, les copolymères acrylonitrile/ butadiène/styrène, et les copolymères styrène/ acrylonitrile.

4. Composition polymère non halogénée résistant à l'inflammation selon la revendication 1, dans laquelle A) constitue 40% à 94% en poids ; B) constitue 1% à 30% en poids ; et C) constitue 5% à 30% en poids par rapport au poids total de la composition polymère non halogénée résistant à l'inflammation.

5. Composition polymère non halogénée résistant à l'inflammation selon la revendication 1, dans laquelle B) est une résine époxy multi-fonctionnelle modifiée dérivée d'une résine époxy multi-fonctionnelle choisie parmi les structures suivantes : 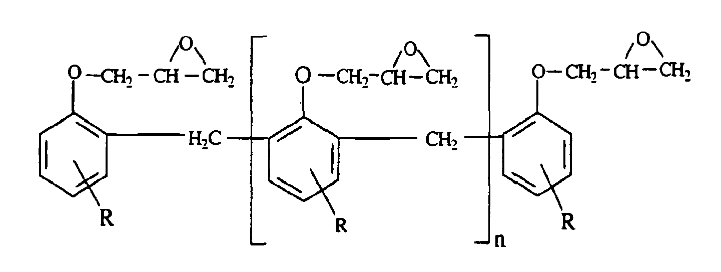 dans lesquelles "R" représente un atome d'hydrogène, un groupe (alkyle en C₁ à C₃)hydroxy ou un groupe alkyle en C₁ à C₃, par exemple, un groupe méthyle ; et "n" vaut 0 ou est un nombre entier de 1 à 10 ; 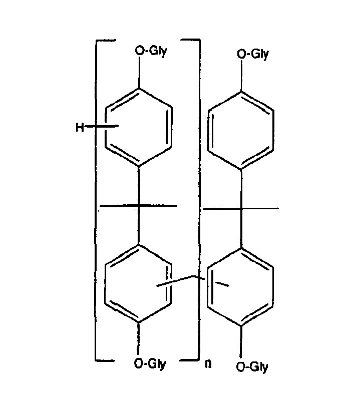 dans lesquelles Gly représente un groupe glycidyle ; et

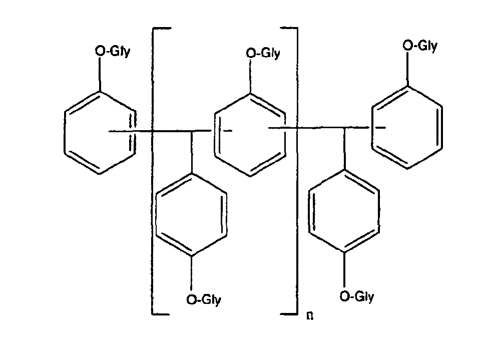

6. Composition polymère non halogénée résistant à l'inflammation selon la revendication 1, dans laquelle la résine époxy multi-fonctionnelle modifiée est une matière produite à partir d'une résine époxy qui contient, en moyenne, plus de 1 groupe époxyde par molécule.

7. Composition polymère non halogénée résistant à l'inflammation selon la revendication 1, dans laquelle la résine époxy multi-fonctionnelle modifiée est modifiée sur le plan fonctionnel par plus d'un modificateur.

8. Composition polymère non halogénée résistant à l'inflammation selon la revendication 1, dans laquelle le modificateur d'époxyde est le 2-phénylphénol, le 4-phénylphénol, le diméthylphénol, le butylphénol tertiaire, le bisphénol-a, le bisphénol-f, le diisocyanate de méthylène-diphényle, un diisocyanate de toluène ; l'acide salicylique, le sulphanilamide, l'anhydride succinique, ou l'anhydride dodécényl-succinique.

9. Composition polymère non halogénée résistant à l'inflammation selon la revendication 1 essentiellement composée de :
A) 40% à 94% en poids, par rapport au poids total de la composition, d'un polymère thermoplastique, contenant éventuellement 10% à 35% en poids d'un polymère de polyéther de phénylène, par rapport au poids total de la composition ;
B) 1% à 30% en poids de la résine époxy multi-fonctionnelle modifiée, par rapport au poids total de la composition ; et
C) 5% à 30% en poids du composé contenant du phosphore, par rapport au poids total de la composition.

10. Composition polymère non halogénée résistant à l'inflammation selon la revendication 9, dans laquelle le composé contenant du phosphore est un phosphate d'aryle.

11. Composition polymère non halogénée résistant à l'inflammation selon la revendication 9, dans laquelle le polymère thermoplastique A) est choisi parmi les polymères obtenus à partir d'un monomère vinylaromatique ou de ses versions hydrogénées, le polycarbonate, les compositions d'acrylonitrile/butadiène/styrène-polycarbonate, la résine polyéther de phénylène, les polymères d'éther hydroxyphénoxy, le polytéréphtalate d'éthylène, les résines époxy, les copolymères éthylène/alcool vinylique, les copolymères éthylène/acide acrylique, les interpolymères polyoléfine/monoxyde de carbone, les polyoléfines, les copolymères d'oléfines cycliques, les copolymères et homopolymères d'oléfines et une de leurs combinaisons.

12. Composition polymère non halogénée résistant à l'inflammation selon la revendication 9, dans laquelle le polymère thermoplastique A) est choisi parmi les copolymères séquencés styrène/butadiène, le polystyrène, le polystyrène à haute résistance au choc, les copolymères acrylonitrile/butadiène/styrène (ABS), et les copolymères styrène/acrylonitrile.

13. Composition polymère non halogénée résistant à l'inflammation selon la revendication 9, dans laquelle la résine époxy multi-fonctionnelle modifiée est une matière produite à partir d'une résine époxy qui contient, en moyenne, plus de 1 groupe époxyde par molécule.

14. Composition polymère non halogénée résistant à l'inflammation selon la revendication 9, dans laquelle la résine époxy multi-fonctionnelle modifiée est modifiée sur le plan fonctionnel par plus d'un modificateur.

15. Article produit à partir de la composition polymère non halogénée résistant à l'inflammation selon l'une quelconque des revendications 1 à 14.
